# EUROPEAN PATENT APPLICATION

(11) **EP 1 738 812 A1**
(43) Date of publication of application: **03.01.2007**
(21) Application number: 05717230.6
(22) Date of filing: 23.03.2005
(51) Int. Cl.: B01D 39/16, B01D 46/00, F24F 13/28

(54) **PRODUCTION METHOD, AND FILTER COMPRISING NON-WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOPHILA IN ANY INSTALLATION WITH A RISK OF LEGIONELLA PNEUMOPHILA PROLIFERATION**

(30) Priority: 26.03.2004 ES 200400749; 18.08.2004 ES 200402048; 22.03.2005 ES 200500665
(71) Applicant: Espuelas Peñalva, Joaquin, 26006 Logroño, La Rioja (ES)
(72) Inventor: Espuelas Peñalva, Joaquin, 26006 Logroño, La Rioja (ES)
(74) Representative: Morgades y Manonelles, Juan Antonio
(86) International application number: PCT/ES2005/000156
(87) International publication number: WO 2005/092473

(57) **Abstract**

The invention relates specifically to the physical and chemical characteristics of an air and liquid filter which is intended to trap bacteria and eliminate same. The inventive fabric is manufactured from a fabric comprising non woven type fabrics and/or injected filtering structures or sheets, i.e. which have been obtained by manipulating synthetic artificial fibres using processes that lead to the formation of a lap which, following other industrial operations that are described later, is converted into the non woven fabric or, alternatively, using injection processes into the injected structures or sheets.

## Description

The invention relates specifically to the physical and chemical characteristics of an air and liquid filter which is intended to trap bacteria and eliminate same. The inventive fabric is manufactured from a fabric comprising non woven type fabrics and/or injected filtering structures or sheets, i.e. which have been obtained by manipulating synthetic artificial fibres using processes that lead to the formation of a lap which, following other industrial operations that are described later, is converted into the non woven fabric or, alternatively, using injection processes into the injected structures or sheets.

Another objective is the characteristics of the fibres in the aforementioned non-woven fabric, as well as the treatment that they include, which seek to fix the necessary chemical compounds directly onto the fibres. This allows the non woven fabric, once manufactured, to act as a filter which is able to prevent Legionella continuing to circulate through the inside of cooling towers, heat exchangers, ventilation machines, tanks or any device listed previously and reaching concentrations which are dangerous to man.

Another objective for the invention is the sandwich fabric manufacturing process formed by the combination of non woven fabrics and sheets or injected filtration structures.

Another objective of the invention, in addition to the formation of the non woven fabric, is that of its manufacture which basically includes, among other things, the following operations:
- The selection of fibres which have been already treated with anti-bacterial additives.
- Weighing each and every fibre and groups of fibres forming the fibre mix.
- The same or different fibre mixes.
- The formation of web or felt.
- The superimposition of layers of several non woven fabrics with the same fibres or with a mixture of different fibres.
- The joining of one or more layers of non-woven fabrics.
- Special finishing treatments for each application.
- Cutting, rolling and formatting of the resulting non woven fabric.

### Legislation.

Installations and buildings for the purposes of the patent application are stated in point 1.3 of the "Final Document on Recommendations for the Prevention and Control of Legionelosis" approved by the Public Health Committee in the National Health System, dated 29th October 1998.More specifically where it refers to installations such as (among others):
- Domestic hot water systems: mains and tanks, accumulators, heaters and boilers, etc.
- Domestic cold water systems: mains and tanks, accumulators, tanks, reservoirs, cisterns, wells and others.
- Cooling towers.
- Evaporating condensers.
- Air conditioning conduits.
- Respiratory treatment equipment (respirators and nebulisers).
- Humidifiers.
- Heated swimming pools with or without movement.
- Thermal installations.
- Ornamental fountains.
- Irrigation systems.
- Fire fighting equipment.
- Open air cooling equipment using aerosols.
   Among the buildings are the following:

- Hotels.
- Other tourist facilities: apartments, aparthotels, camp sites, boats and others.
- Sports centres including swimming pools.
- Care facilities: hospitals, clinics, old persons' homes and others.
- Spas, thermals baths.
- Barracks.
- Prisons.
- Other buildings.

### Description of the illness.

Legionelosis is a bacterial illness formed in the environment which basically presents two clinical forms which are completely different: pulmonary infection or "Legionnaires' Disease" characterised by pneumonia with a high temperature and the other non pneumonic form known as "Pontiac Fever" which manifests itself as an acute self limiting febrile syndrome.

Pneumonia is clinically indistinguishable from other a typical pneumonia and frequently requires patients to be hospitalised. The incubation period is normally 2 to 10 days, is more frequent in people between 40 and 70 years old, presenting two to three time more in men than women and is rare in children. The risk of contracting the illness depends on the type and intensity of exposure and the health of the subject, increasing in immunocompromised, in diabetics, in patients with chronic pulmonary illnesses as well as smokers and alcoholics. The rate of attack (no. of patients/no of persons exposed) in outbreaks is 0.1 to 5% of the general population. Mortality in the community is less than 5% but may reach 15 or 20% if an appropriate antibiotic treatment is not instigated. In nosocomial cases the frequency varies between 0.4 and 14% and mortality may reach 40% even 80% in immunocompromised patients without appropriate treatment. The preferred antibiotic treatment is eritromicine which is highly effective and no resistance has been noted. For Pontiac fever the treatment is symptomatic.

Basically, infection from Legionella may be caught in two large areas, the community and the hospital. In both cases, the illness may be associated with several types of facilities and building and may present in the form of outbreaks/clusters, relate4d cases and isolated or sporadic cases.

### Description of the bacteria.

Legionella is a bacteria in the form of bacilli which is capable of surviving in a wide range of physio-chemical conditions, multiplying between 20° C and 45° C and being destroyed at 70°C. Optimum temperature for growth is between 35-37° C. The Legionellaceae family includes a genus, Legionella and 40 species some of which in turn divide into serogroups, such as L. pneumophila, of which 14 serogroups have been described.

Although more than half of the species described have been implicated in human infection, the most common cause of legioelosis is L. pneumophila serogroup 1, which is the most frequent serogroup in the environment.

Legionella is considered to be an environmental bacteria as its natural habitat is surface water such as lakes, rivers, ponds, forming part of the bacterial flora. From these natural reservoirs, the bacteria have moved on to colonise storage systems in cities via the mains system and has entered the domestic water system (hot or cold) and other systems requiring water to operate and may generate aerosols. These installations, on occasions, favour the storage of water and accumulate products which act as nutrients for the bacteria, such as sludges, organic material, corrosion material and amoebas, forming a biolayer. The presence of this biolayer, together with water temperature, plays an important role in the Legionella multiplying until they reach concentrations which are infectious to humans. From these locations, significant concentrations of the bacteria may reach other points in the system where, if they exist, an aerosol producing mechanism may disperse the bacteria in the form of an aerosol. Water drops containing the bacteria may remain suspended in the air and can penetrate the respiratory tracts finally reaching the lungs.

The most common buildings infected with Legionella and which have been identified as sources of infection are hot and cold domestic water systems, cooling towers, evaporating condensers in both hospitals and hotels and other types of buildings. Scientific literature has also described related infections in equipment used for respiratory treatment in hospital environments. Other facilities with the disease are ornamental fountains, humidifiers, rehabilitation and leisure centres, swimming pools on cruise ships and all those facilities previously listed.

An important biological characteristic of these bacteria is its ability to grow intracellularly, both in protozoals and in human macrophages. In natural aquatic environments and in buildings, the presence of protozoals plays an important role in supporting the intracellular multiplication of the bacteria, with this process being used as a survival mechanism in unfavourable environmental conditions.

### Transmission of the bacteria to humans.

Entry of the Legionella bacteria into the human body is basically by inhalation of aerosols containing a significant number of bacteria. There is no evidence of person to person transmission or the known existence of animal reservoirs.

A series of requirements have to be achieved in order for the infection to produce in humans:
* The micro-organism has a means of entry into the installation. This is usually through natural water coming in which is contaminated with the bacteria, normally in small quantities.
* It multiplies in the water until is achieves sufficient number of micro-organisms so that they become a risk to susceptible people. The multiplication is a function of the water temperature, its storage and the presence of other contaminants, including dirt inside the installation.
* It is dispersed in the form of an aerosol through the system. Contaminated water is only a risk when it is dispersed into the atmosphere in the form of an aerosol (dispersion in liquid or in solid in air or in gas). The risk increases when the size of the water drops in suspension become smaller, because the drops remain in suspension in the air for longer and only drops less than 5 microns in size penetrate the lungs.
* It is virulent in humans, because not all species or serogroups are equally implicated in the production of the illness.
* Susceptible individuals are exposed to aerosols containing sufficient quantities of viable Legionella.

In the hospital environment, the risk of catching the illness after exposure to contaminated water depends on the intensity of the exposure as well as the health of the person concerned. There is a greater risk in immunocompromised illnesses and patients with chronic illnesses, such a chronic renal deficiency, malignant hemopathies, smokers, the elderly.

### Status of the previous technique.

There are precedents concentrating on anti-Legionella filters, but they have been proven to be ineffective in practice. These are filters made with material with a porosity or filtration to retain bacteria larger than 0.2 microns (Legionella bacteria are very small, 0.3 to 0.9 microns wide and 2 microns long), to prevent ingestion in foods or liquids. Both forms of entry do not result in the illness occurring, it is only harmful via the lungs through contaminated water or air. As stated in previous paragraphs, "Transmission of the bacteria to humans", the bacteria penetrate the lungs in any water drop less than 5 microns in size and therefore those drops less than 0.2 microns and which are breathed in are likely to cause the infection. This is the reason for the ineffectiveness of these methods.

### background of the invention.

Precedents to the invention are located in those being applied now hereinafter called non woven fabrics, with anti-bacterial additives, for different types of applications, for example non woven fabrics to treat bacteria producing odour in shoe linings. Subsequently and in partnership with anti-bacterial chemical product manufacturers, non woven fabrics have been produced with directly treated fibres which satisfactorily achieve the required aims, in a way that the non woven fabric has improved durability and does not require heat treatment to fix the product onto the surface. In this way these treatments do not affect the fibres comprising the non woven fabric from the start as a consequence of excess temperature above which the fibre can withstand and in some cases as a consequence of its physical and chemical characteristics, changing the final colour and appearance of the product.

Other precedents of the invention were the mixture of fibres treated with natural fibres for a non woven anti-bacterial, anti-mite fabric for mattresses, upholstered furniture, curtains and wall and floor fabric covers, thereby increasing user comfort particularly people with allergies and asthma, with the added advantage of being non woven fabrics which are completely washable up to 60 degrees and others up to 95 degrees.

One of the advantages achieved by treating fibres instead on non woven fabrics was an increased durability for the anti-bacterial treatment as it lasts much longer than applying it onto fibres. The treated fibres store the anti-bacterial treatment inside the fibre as it is not a surface treatment as opposed to applying them to the non woven fabric.

Legal regulations have been introduced with different degrees of success in order to prevent Legionella attacks, because at certain times during the year the general air temperature enhances the appearance of Legionella focus inside such equipment and their transmission inside buildings and rooms which contribute to the same.

Experience has shown that in addition to the different legal measures, the most effective means of preventing Legionelosis is disinfecting and periodically cleaning installations at risk. In order to do this authorised disinfectants have to be used, for example hyperchlorination of towers is effective, but this only has a short term effect and the problem usually reoccurs within a month, sometimes days of the disinfection. Also, hyperchlorination is not effective in pipes or conduits as well as in other heated areas in the installation.

Moreover, legislations requires preventative maintenance and disinfection in accordance with the manufacturer's instructions, checking for possible leaks, obstructive corrosion and checking the proper operation of ventilators, motors and pumps which, when not working properly, may create an unwanted rise in temperature and therefore an increased concentration of Legionella which are already present under normal conditions although in concentrations which are not dangerous to human health.

### Characteristics of the invention.

Previous research on the techniques used top reach the objective of this invention have demonstrated that the ideal fibres in non woven fabrics for the invention may be polypropylene, polyester, acrylics, polymids, modacrylics, viscose, polyethylene, aramides, bicomponents, etc. i.e. fibres with a mixture of two or more of the above fibres and other fibrous materials, according to the requirements of the application.

Fibres listed in the above paragraph admit bacterial treatment which integrates into all of the body and core of the fibre. It therefore can be stated that the antibacterial treatment is not superficial on the fibre or on the non woven fabric as previously explained.

The range of possible fibres in the non woven fabric allows a broad range of thicknesses as well as the type of cross section types which may be circular, square, elliptical, hollow and others which have been demonstrated to be equally effective for the non woven fabric used for filtering in this invention. Thicknesses may range from 0.1 mm to 15 cm for which the weight may vary between approximately 5 to 2,500 grams.

### Tests, analyses and trials carried out.

Samples of manufactured non woven fabrics in accordance with any of the processes in this invention were submitted to microbiological laboratory tests to evaluate their behaviour with Legionela pneumophila subspecies pneumophila ATCC 33152.

During these tests Legionella agar GVPC, bacteriological agar and NaCl physiological solution (common salt) were used. Cultures were prepared with these substances and suspensions in an initial concentration of around 10⁶ Legionella/ml.

Three different solutions were prepared with these suspensions which were submitted to an incubation period of 7 days at 36° C in concentrations of:
- 7.1 x 10⁶ Legionella/ mL solution
- 7.1 x 10⁴ Legionella/ mL solution
- 7.1 x 10² Legionella/ mL solution

Preparation for the test ended by pouring these solutions onto analysis dishes to which was added 100 ml of agar (1.0%). Concentrations of Legionella in the test agars were finally:
- 7.1 x 10⁵ Legionella/ mL solution
- 7.1 x 10⁴ Legionella/ mL solution
- 7.1 x 10³ Legionella/ mL solution

At the same time, other analysis dishes were prepared with the initial solutions in their three concentrations, in order to finally add non woven fabric filter samples to be analysed. The test took 72 hours for incubation at 36° C.

This test was initially designed to test the non growth or the non proliferation of bacteria in the presence of Cellular Legionella bacteria.

The lower presence of bacteria not only occurred in the tests carried out on the samples with a high concentration of Legionella (7.1 x 10⁶) in the initial sample, but also in those test dishes with an initial bacterial composition of more than 1000 times lower.

Therefore, the result of the micro-bacterial analysis on the non woven fabric in the invention not only proved the inhibition of growth and proliferation of the bacteria but also a clear bactericide effect.

### Description of the processes and raw materials in the invention.

Non woven fabrics manufactured with the characteristics described in the above paragraphs have been mixed with other non woven fabrics so that they form a anti-Legionella non woven fabric sandwich, with a non woven fabric support and polypropylene, polyethylene, polyester, glass fibre, steel, aluminium, foam etc compounds as a support for the product in the invention. This facilitates its use as a support in tanks, pools, cooling towers, heat exchanger ventilators and any other location where concentrations of Legionella can be attacked through filtration and statically depositing them.

In the first claim of this patent, the manufacturing process is specified for the patent which will use "artificial, synthetic fibres cut or in continuous filament and its mixtures, previously treated with antibacterial compounds, specifying in the 17 ^{th} claim which antibacterial treatments for fibres have been prepared on the basis of silver derivatives, phenoxyhalogenate derivatives with transporters, plus permetrine derivatives, isothiazolinone derivatives, tetraalkylamone silicons, organozinc compounds, zirconium phosphates, sodium, triazine, oxazolidines, isotiazolines, hermiformals, ureides, isocyanates, chlorine derivatives, formaldehydes, carbendazime or chipping or chipping mixtures treated with similar products.

During the development of the products in the main patent, different tests were carried out on the described procedure in the patent varying some aspect without varying its essence.

This product is characterised by the fact that it has biocide and biostatic effects.

These experiments have concluded that the application using physical-chemical procedures of a different nature on certain products directly onto the non woven fabric instead of onto the mother fibre also has the required bactericide effect and in the same way is also effective in the fight against Legionella pneumophila.

Another procedure is the manufacture of felts with treated fibres and subsequently treating it again with antibacterial material to be able to gradually release a biocide product.

Certain compounds (salts and other derivatives) made from Zinc (Zn), Tin (Sn), Copper (Cu), Gold (Au), Silver (Ag), Cobalt (Co), Nickel (Ni), Palladium (Pd), Platinum (Pt), Cadmium (Cd), as well as other metal elements from the transition area and other configuration of a metallic nature of any other element produce ions which, on release have a marked anti-bacterial character.

In the development of this invention, different compounds of one or more of the aforementioned elements were shuffled to be applied with other additives in different procedures on the non woven fabric base, to filters or injected filtering sheets:
- Application in the form of microscopic powders
- Application in solution, suspension or aqueous emulsion or any other liquid if technically possible
- Application in a mixture with polyethylene, polymid, EVA chippings, different types of Hotmelt adhesives or any other type.
The main application procedures were as follows:
- In a liquid, mainly aqueous liquid bath
- Spray
- Atomiser
- Sheet
- Inducted
- Immersion in any of the above mentioned media
- Any other common procedure in plastic, textile and foam industries, technically equivalent to those listed and applicable to the invention.

In terms of the application of the aforementioned procedures, it has to be stated that the processes are limited to 300 °C, given that above this temperature, the compounds may change and lose some of their bactericide properties.

In the same way, another line of development in the invention concentrated on the fibres. In addition to the fibres described in this patent, other biodegradable fibres were used. In this way and playing with the percentages of fibre and bactericide product(s) described in the original patent or in this patent, it was able to allow the fibre to release the exact percentage of bactericide as stated in the application.

The same properties in copper and its derivatives in terms of being able to release positive and negative ions at will is possible with zinc and any other metal (from the ones listed above) with the possibility of ionising. These other products can be considered to be technically equivalent to this addition.

Tests on our product have allowed an aura effect to be observed which creates an area where Legionella does not exist around it. This effect allows us to use products referred to in the patent as powerful bactericides which eliminate bacteria form the biofilm creating sterile areas. These products can have floating properties to be used in gas-liquid interfaces.

Subsequent research has demonstrated that the Legionella can be transmitted by inhalation or swallowing. This inhalation or swallowing may originate from Legionella infected water gaining access to the lungs and reproducing inside them. This type of contagion was stated in information on Legionella from the "Society of Health Care Epidemiology of America" in addition to other medical publications. This possibility contagion is common to all varieties of Legionella, not just the pneumophila variety.

Given the above, it has been demonstrated that the Legionella pneumophila which is found in public sources, drinking water distribution systems domestic water and other uses, may be the origin of infection, in addition to traditional systems described in the original patent.

Subsequent research has demonstrated that Legionella may be transmitted by inhalation or swallowing. This inhalation or swallowing may originate from Legionella infected water gaining access to the lungs and reproducing inside them. This type of contagion was stated in information on Legionella from the "Society of Health Care Epidemiology of America" in addition to other medical publications. This possibility contagion is common to all varieties of Legionella, not just the pneumophila variety.

Other studies illustrate that this infection through Legionella may be found in pipes, water circulation systems in the food packaging, water and drinks bottling industries and the food industry in general with the specific matter of if these infected drinks, water and liquids pass directly into a human being via the digestive tract there is no form of repercussion from a health point of view and therefore there is no infection. Nevertheless, if these sources originate from swallowing and transfer, even though this is in a microscopic amount, from the mouth and digestive tract to the respiratory tracts, an infection can occur. In this way, installations have to take into account all that equipment which can accumulate water and/or emit it as an aerosol.

The above information which basically consists of research reports, medical centre and research institution reports on infectious illnesses, makes one consider that the dangers from Legionella pneumophila infection may be found in the above mentioned installations and also in drinking water installations plus in equipment which runs the risk of being contaminated form the same, such as, for example, water storage and distribution systems in airport terminal buildings, trains, ships and other similar locations.

As a consequence of the above and one of the aims of these improvements, is the application of the filter in this main and additional patent combined with other filtering methods which may be used in the aforementioned public sources, drinking water distribution systems, water circulation systems, in industries in general, drinking water plants and water storage and distribution systems in transport networks. In summary, the filter to prevent Legionella will comprise a filtration structure itself and will form part of other more complex filters.

These complex filters shall include filters and the usual filtration systems, for example: cartridge filters, vacuum rotating filters, press filters, plate filters, membrane filters, tangential filters, centrifuges, ultra and micro-filtration equipment, reverse osmosis, dialysis, cyclones, electrostatic filters and similar filters.

Within these filters, our fabric filter in its fabric and non woven fabric forms may operate as a filter in itself, accompanied by other filtration elements, for example microfiltration and ultrafiltration membranes or as an antibacterial protective cover and fat eliminator even forming part of the raw material for membranes and other filtration elements, being able to be manufactured as, for example, plates for plate and membrane filters.

Another improvement to this extension is the manufacture of the aforementioned elements described in woven fabric using monofilaments in the third point of the eleventh claim in the main patent.

Another aim in these improvements is the application of filter manufacture processes claimed in patents No. 200400749(4) and 200402048(2) for cleaning and furnishing elements such as towels, curtains, sheets, pillows, bed covers, carpets, rugs, shower curtains, bath mats, bandages, dusters, and other similar products used in public buildings used for health purposes, such as clinics, sanatoria, hospitals, laboratories and installations and other similar buildings.

Another purpose for these improvements is the application of the manufacturing process for filters in the main patent and its subsequent improvements for the development of floating fabric and non woven fabric filters equipped with buoyancy for aquifers, tanks, thermal water, water conduction and treatment plants. These materials shall, have an antibacterial and anti-algae action to prevent the formation of a biofilm in the solid-liquid interface.

As a consequence of these previous experiments and new applications in the main patent and its improvements, is the improvement of the manufacturing process for the main and additional patents so that the surface treatment for fibres and monofilaments described in them take into account these specifications in order to improve the surface treatment of these fibres and monofilaments for improving resistance to washing. In order to do this, it is envisaged that biocide substances are incorporated into the fibre structure: either alone or with other compounds: flame retardants, anti-static material, the usual colourings in industrial fabrics: allowing their use in cooling towers and other equipment without them losing their properties. In the same way, these filters formed by fibres and monofilaments are capable of filtering Legionella pneumophila in contact with liquids which are presumed to be infected, as shown in the laboratory test stated in the main patent. They are also required to be able to withstand aggressive action in any type of liquid and at their temperature.

Another aim of these improvements is extending the range of bactericide products with other with similar effects and with a greater spectrum: algaecides, fungicides, antivirals, to expand the field of application of the filter, to avoid possible bioresistance developed by micro-organisms to biocides and to be able to develop synergies which expand the effectiveness of the products.

In the same way, expanding the number of compounds allows fibres to be treated with non toxic, biodegradable and dermatologically inert compounds according to the requirements of the installation to be protected.

Another objective of these improvements in the possibility of adding properties claimed in this family of patents to the filter via the addition of compounds which offer it and its configurations, their properties via impregnating them in colouring, tenso-active and antistatic baths as well as adding and combining the treatment or procedure with the fibres and monofilaments, which remain in the aforementioned fibres and monofilaments in the baths in which they were treated.

In order to improve the wetting ability and the behaviour of the filters, activated carbon fibres have also been added to the claims in the main patent and plasma treatment on the fibres has been included which enhances the properties of these filters by increasing the concentration of biocide agents included in the fibre.

These treatments and the impregnation claimed in the first additional patent have allowed the possible natural fibres to be extended, such as:
- Animal fibres: silk, wool and hair (alpaca, mohair, goat, camel...)
- Plant fibres: Seed fibres (cotton, kapok, coconut...), Liberian fibres (linen, hemp, jute and ramie): Leaf fibres (abaca and sisal). Plus others such as:

- Metal fibres: Copper, silver...
- Silicon fibres.

As a consequence of the behaviour (resistance to washing and bactericide effect) of the filters in this invention, there is the option to disinfect fluids by draining, filtration and recirculation of small volumes of fluid and their prolonged use in cooling towers and other similar equipment.

Another aim of this extension is the optimisation and improvement of the filtering capacities of the products in this invention using the addition of additives during the manufacturing process which facilitate the absorption of organic biomaterial, such as adhesines or other inorganic absorbents such as silica gel, activated carbon fibres, zeolites, ionic exchange resins, diatom soils and plastic films.

The above improvements allow the manufacture of a series of products which allow work in the direction of new applications. Firstly, the expansion of the filter in the main patent and improvements so that it is also a filter which can retain all the varieties of Legionella, *Klebsiella pneumoniae, Pseudomonas aeroginosa, Staphylococcus aureus, Staphylococcus epedrmis, Escherichia coli, Serratia marcescens, Bacillus coreus, Vidrio parahacmolyticus, Proteus, Vulgaris, Salmonella typhimorium, Burkholderia cepacia,* as well as anthrax, A and B flu virus and Avian flu or serious acute respiratory syndrome (SARG).

Filters may be manufactured as fabrics in separate pieces and can be used to protect trees in the "Quercus" family from fungus such as *Phytophthora cinnamomi* or using such filters against: Aspergillus Niger, Aspergillus regens, Candida, albian, Trichophytun menthagophit creating a barrier around the tree and preventing the propagation of the aforementioned fungus. Alternatively, the manufacturing process described in the main and additional patent may be transferred, according to suitable modifications, to the manufacture of masks, safety suits for restricted atmospheres, floor cloths and others.

The following compounds grouped by family and active groups are included in the biocide treatments in the original patent and in the first extension. These compounds will be used in the aforementioned applications:
- Glutaraldehyde
- Hypochlorite salts
- Chloroisocyanurates
- Sodium bromide
- 2.2-dibromo-3-nitrilopropionamide (DBNPA)
- N-trichloromethyl-thio)ftalamide (Folpet)
- 10.10'-oxibisphenox arsine (OPA)
- Denatonium Benzoate
- 1-bromo, 1-bromomethyl-1.3 propanodicarbonitrile
- Tetrachloroisoeftalonitrile
- Poly(oxyethylene)(dimethylimine)ethylene (dimethylim)ethylendichloride
- Methylene bisthiocyanate (MBT)
- Dithiocarbamate
- Cyanodithiomidocarbomate
- 2-(2-bromo-2-nitroethenylfuran (BNEF)
- Beta-bromo-beta-nitroestyrene (BNS)
- Beta-nitroestyrene (NS)
- Beta-nitrovinylfuran (NVF)
- 2-bromo-2-bromomethyl-glutaronitrile (BBMGN)
- 1.4-bis(bromoacetoxy)-2-butene
- Acroline
- Bis(tributyltin) oxide (TBTO)
- 2-(tert-butylamine)-4-chloro-6-(ethylamine)-s-triazine
- Tetraalkyl phosphonium chloride
- 7-oxabicycle[2.2.1]heptane-2.3-dicarboxilic acid
- 4-5dichloro-2-n-octil-4-isozialine-3- dicarboxilic acid
- 1-bromo-3-chloro-5.5-dimethyldanton (BCD)
- Zinc pirition
- Alcohols:
   - 2-methyl-5-nitromidazol-1-ethanol
   - 2-bromo-2-nitropropane-1.3diol
   - 2-(tiocyanomethyltio)benzitiazol (TCTMB)
   - Terpineol
   - Timol
   - Chloroxylenol
   - C12-C15 etoxiade fatty alcohol
   - 1-metoxi-2-propanol
- Amines:
   - 2-decylthioethylamine (DTEA)
   - Alkyldimethylbenzylammonium chloride
   - Tetrahydro-3.5-dimethyl-2H-1.3.5-hydrazine-2-tione
   - 2-bromo-4-hydroxiacetophenone
   - 2-N-octil-isothiazolin-3-one (OIT)
   - Alkyldimethylamine coco oxide
   - N-coco alkyltrimethylenamine
   - 4-5-dichloro-2-n-octil-4-isozialine-3-one
   - Tetralkylammonium silicon
- Organosulphurate compounds:
   - Bis(trichloromethyl) sulphone
   - S-(2-hydroxipropyl)tiomethanosulphonate
   - Tetrakishydroximethyl phosphonium sulphate (THPS)
   - Mercaptopyridine N-oxide (pyritione)
- Copper salts:
   - Copper sulphate
   - Basic copper carbonate
   - Copper and ammonium carbonate
   - Copper hydroxide
   - Copper oxychloride
   - Cupric oxide
   - Cuprous oxide
   - Copper and calcium powder
   - Copper silicate
   - Copper sulphate
   - Copper sulphate and tribasic potassium (Bordeaux mixture)
- Isothiazolones:
   - 4.5-dichloro-isothiazolinone (DCOIT)
   - Butyl-benziisothiazolinone (butyl-BIT)
   - Methylisothiazolone
   - 2-N-actil-isothiazolin-3-one (OIT)
- Guanidines:
   - Dodecylguanide acetate
   - Dodecylguanade hydrochloride
   - Polyhexamethylenbiguanide (PHMB)
- Salt of quaternary ammonium:
   - 3-trimethoxy sylildimthyloctadecyl ammonium chloride (Silanequat)
   - Alkyl dimethyl benzylammonium chloride
   - 4-methylbenzoate dodecyl-di-(2-hydroxethyl)-benzyl ammonium
- Phenols and chlorinated phenols:
   - 5-chloro-2-(2.4-dichlorophenexi) phenol
   - 2.4.4'-trichloro-2'-hydroxyphenyl ether (Triclosan)
   - m-phenoxybenoil-3-(2.2-dichlorovinyldimethylcyclo propane carboxylate
   - Trichlorophenoxyphenol (TCP8)
   - 1.23.benzothiadiazol-7-acid
   - Thiocarboxylic-s- methyl ester
   - 4-chloro-3-methyl-phenol
   - Timol
   - Saligenin
   - O-phenylphenol
- Colourings:
   - Methyline blue
   - Brilliant green
   - Gentian violet and dimethyl gentian violet
- Iodophors:
   - Poly vinyl pyrrolidone
   - Iodated povidone

The following specific anti-virals against common and avian flu have been added to the above compounds complementing this family of patents:
- Adamantanes:
   - Amantadine
   - Rimantadine
- Neuraminidase inhibitors:
   - Zanamivir
   - Oseltamivir or ribivarin

The following algaecides have been added to the above compounds complementing this family of patents:
- Tributyl tin and derivatives
- Sodium thiosulphate

The following fungicides have been added to the above compounds complementing this family of patents:
- Benzene substitutes:
   - Chloroneb
   - Chlorotalonil
   - Dichloran
   - Hexachlorobenzene
   - Pentachloronitrobenzene
- Thiocarbamates:
   - Metam-sodium
   - Tirad
   - Ziram
   - Ferbam
- Ethylene-bis-dithiocarbamates:
   - Maneb
   - Zineb
   - Nabam
   - Mancozeb
- Thiophthalamides:
   - Captan
   - Captafol
   - Folpet
- Copper compounds:
   - Copper Phenylsalicylate
   - Copper Linoleate
   - Copper Naphthenate
   - Copper Oleate
   - Copper Quinolinolate
   - Copper Resinate
- Organostanic compounds:
   - Phenylstanic acetate
   - Phenylstanic chloride
   - Phenylstanic hydroxide
   - Triphenylstane
- Cadmium compounds:
   - Cadmium chloride
   - Cadmium succinate
   - Cadmium sulphate
- Other organic fungicides:
   - Anilazine
   - Benomyl
   - Cycloheximide
   - Dodine
   - Etridiazol
   - Iprodione
   - Metalaxyl
   - Thiabendazole
   - Triadimefon
   - Tonaphtate (O-2-Naphtyl m, N-dimethylthiocarbanylate)
- Fluoroquinolones:
   - Fleroxacine
   - Cyprofloxacine
   - Chlorohexadine gluconate
- Compounds capable of incorporating metals in their structure:
   - Zirconium sodium phosphate
   - Aluminiums
   - Calys
   - Zeolites
   - Exchange resins

The complete list of compounds above and the claims in previous patents (No. 200400749(4) and 200402048(2)) cover the complete range and anti-bacterial, anti-viral, algaecide and fungicide activity. A large majority of the above compounds have anti-microbe activity in general which also eliminate gram positive and gram negative bacteria, viruses, algae and fungus, for which the applications of this invention are numerous in addition to those stated above.

Other details and characteristics shall be demonstrated during the course of the description below, which refers to the drawings attached to this report in a diagrammatic format indicating the preferred details for descriptive purposes but which are not limiting to this invention.

Below are several possibilities for the manufacture with a numbered list of the main elements which appear in the drawings and which form part of the invention: (9) mixers, (10) loader, (11) power supply, (12) carding machine, (13) cross lapper, (14) pre-needle puncher, (15) needle puncher, (16) structurer, (17) thermofixing (17) thermofixing, (19) felting machine, (20) unroller, (21) padding/atomising /scraping, (22) oven, (23) scatter, (24) calendaring and folding, (25) mono fibre non woven fabric or continuous filament, (26) synthetic or natural fibres, (27) artificial fibres, (28) non woven fibre compounds. Plastics or foams, (29) bifibre fabrics, bicomponents and single layer, (30) trifibre, trilayer fabrics, (31) cover, (32) various meshes and supports.

Figure 1 is a view of a non woven fabric seen in cross section, (a) formed by one single fibre, (b) formed by three different fibres.

Figure 2 is a view of another non woven fabric (30) comprising several non woven fabrics in a non woven fabric sandwich of several layers (31).

Figure 3 is a view of another non woven fabric formed by several non woven fabrics with intermediate meshes (32) of various compounds in order to give the resulting non woven fabric specific mechanical rigidity to be applied in different parts of cooling equipment, heat exchangers, tanks, etc.

Figure 4 is a diagram of blocks of one of the possible preferred manufacturing procedures for non woven fabrics in this invention.

Figure 5 is another diagram of manufacturing blocks.

Figure 6 is a diagram of blocks of one of the possible manufacturing possibilities for finishes and folding.

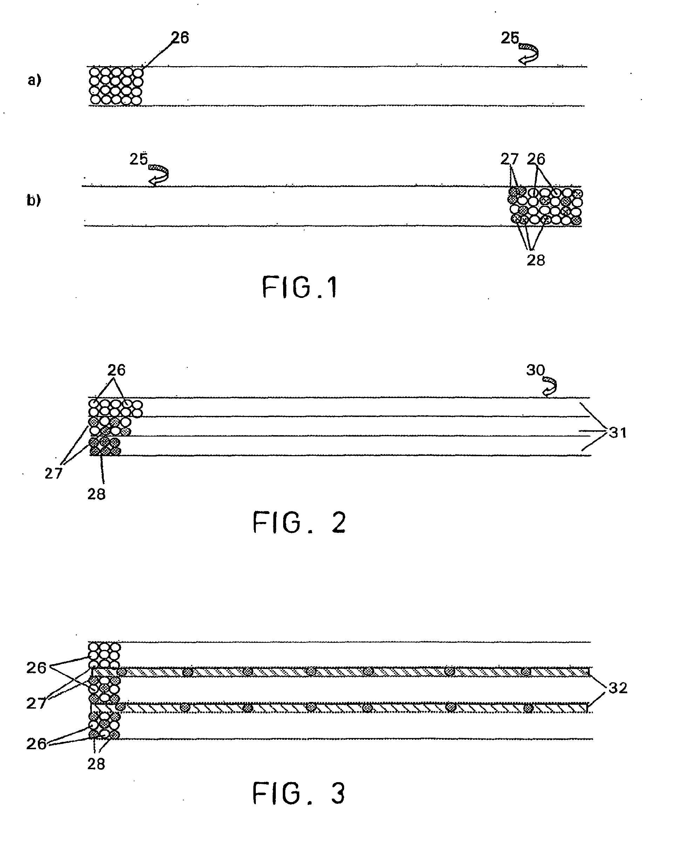

In one of the preferred uses in this invention and as shown in figure 1, an anti-Legionella filter manufactured with non woven fabric is formed by modified natural polymer chemical fibres like those stated below:
o o Viscose
o o Modal
o o Cupro
o o Acetate
o o Triacetate
o o Protein
o o Alginate
Or from synthetic polymer chemical fibres as follows:
o o Polymid
o o Aramid
o o Polyester
o o Acrylic
o o Modacrylic
o o Chlorofibre
o o Fluorofibre
o o Vinyl
o o Elastane
o o Eslastodien
o o Polypropylene
o o Polyethylene
o o Promix
o o Polychal
o o Novoloid
o o Polyimide
o o PPS
o o PBI
o o Inidex
Or from various fibres as listed below:
o Glass
o Carbon
o Other fibrous materials
o Bicomponents and polycomponents

Accompanied or unaccompanied by products such as: High and low density polyethylenes, PVC, Nylon, Teflon, Silicons, Polyesters, Polycarbonates, Metacylites, Polyolephines, Chain hydrocarbons, Thermo hardeners, Thermoplastics and others.

Polyurethane, High and low density polyethylenes, PVC, Nylon, Teflon, Silicons, Polyesters, Polycarbonates, Metacylites, Polyolephines, Chain hydrocarbons, Thermo hardeners, Thermoplastics, nitrogen helium mixtures, phenols, inert gas, Afordicarbonamides, foaming products, Poliol, TDI, Toluene Isoziotane, Polyether, HR.

In another possible use of this invention the non woven fabric may be formed by any mixture of two or more of the above fibres with a composition from 0.5 to 99.5%, with a treatment on each type of fibre or its mixture with anti-bacterial additives from 0.02% to 65%.

The preparation and treatment with antibacterials shall be based on silver derivatives, phenoxyhalogenate derivatives with transporters, plus permetrin derivatives, isothiazolinone derivatives, siliconas de tetraalkyl ammonium, organozinc compounds, zirconium phosphates, sodium, all in liquid or solid form, plus other products likely to attain the anti-Legionella bactericide effect.

The possible ranges of fibres in the non woven fabrics stated in the above paragraphs shall be as follows:
- Fibre thickness from 0.02 to 1,500 deniers.
- Cross section of fibres: circular, square, elliptical, hollow, trilobal, flat and similar.
- Fibre lengths from 0.1mm to 500mm and continuous filaments.
- Non woven fabric density in thicknesses of: 0.1 to 15cm.
- Non woven fabric weight: from 5 to 2,500 grams.
- Fibre fusion point: from 60° C to 450° C.
- Non woven fabric fusion point: from 60° C to 450° C.

As can be seen ion Figure 2 which is totally diagrammatic view of a non woven fabric, the fabric can be formed using a process which forms part of this invention via a sandwich of non woven fabrics with anti-bacterial treatment in the amount stated for the invention, as well as the physical and chemical characteristics stated above.

As can be seen in Figure 3, another purpose of the invention is the manufacture of other non woven fabrics, without reducing the properties as an anti-Legionella filter and the aforementioned characteristics for this invention, is that it contains polypropylene, polyester, glass fibre, steel mesh so that when it is operating as a filter it has parameters which allow it to support certain amounts of mechanical forces which may be applied to it in different types of tanks, pools, cooling towers, ventilators for cooling equipment and air conditioning.

There is the possibility of designing other procedures according to the requirements of the application which may be felting, thermo fixing, calendaring, needle punching and special consolidations of water, air and others.

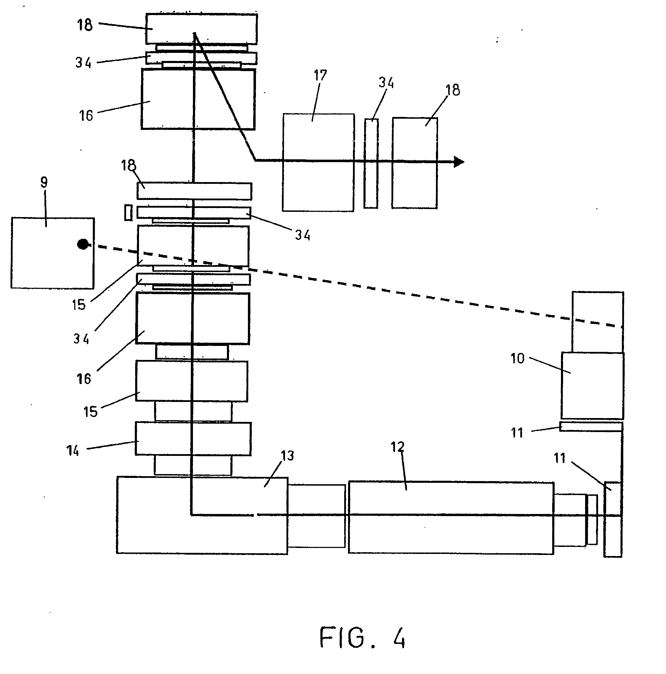

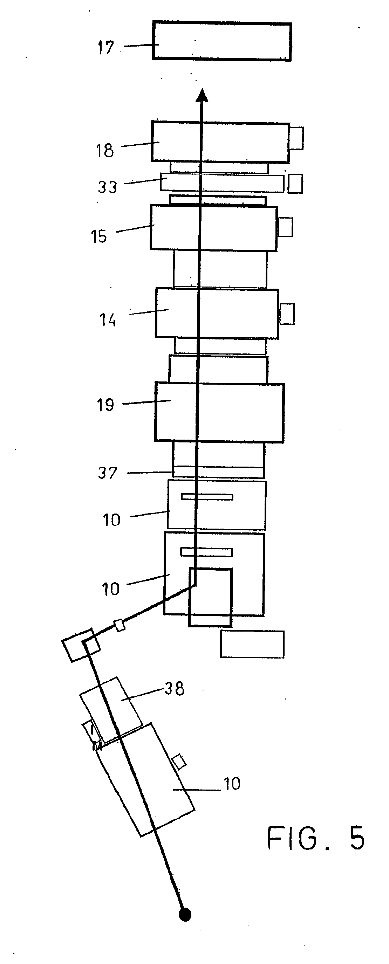

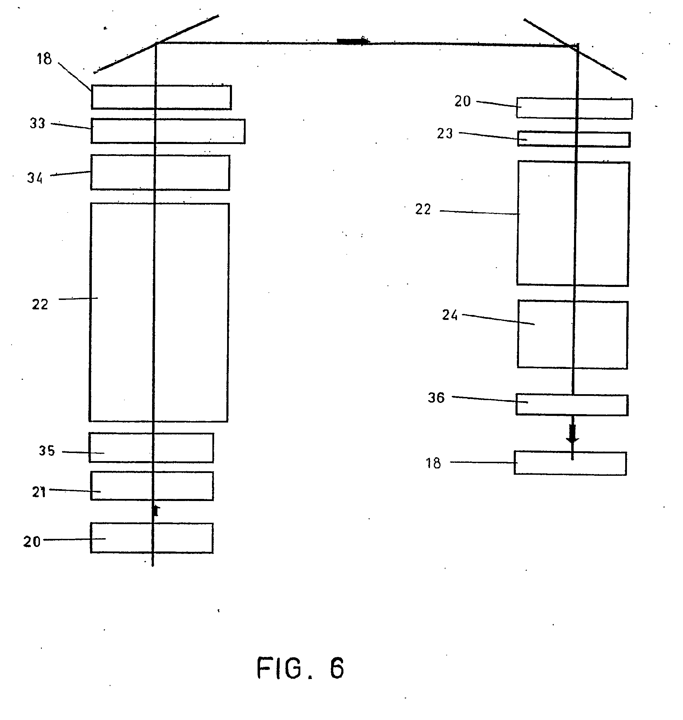

The non woven fabrics described above as one of the purposes of the invention may be manufactured in accordance with the procedures shown in Figures 4, 5 and 6 which include, among others, the following operations:
* Selection of fibres already treated with antibacterial additives.
* Weighing of each and every fibre from the groups of fibres in the fibre mix.
* Mixing the same of different fibres.
* Forming a web or felt.
* The superimposition of several non woven fabric layers manufactured from the same fibre or from a mixture of different fibres.
* Joining one or more layers on non woven fabrics or joining one or more layers with one or more layers of intermediate mesh and supports.
* Finishes of several different forms of thermofusion, additives and compounds for different treatments for special finishes for each application.
* Cutting, rolling and formatting of the non woven fabric or resulting compound.

### Procedure 1

- Selection of fibres already treated with antibacterial additives.
- Weighing of each and every fibre from the groups of fibres in the fibre mix.
- Mixing the same of different fibres.
- Forming a web or felt.
- The superimposition of several non woven fabric layers manufactured from the same fibre or from a mixture of different fibres.
- Joining one or more layers on non woven fabrics or joining one or more layers with one or more layers of intermediate mesh and supports.
- Finishes of several different forms of thermofusion, additives and compounds for different treatments for special finishes for each application.
- Cutting, rolling and formatting of the non woven fabric or resulting compound.

### Procedure 2

- Weighing of fibre or fibres.
- Mixing the fibres.
- Feeding the loader using the volumetric column.
- Directing or mixing the fibre or fibres in a carding machine and forming a web.
- Forming a felt by folding and creasing, or changing the direction of one or more webs in a cross lapper.
- Reducing the thickness of the felt in a pre-needle puncher (according to the processes).
- Needle punching the felt with one or more needle plates (according to the processes).
- Structuring the felt (according to the processes).
- Calendaring. Thermofixing or induction (according to the processes).

### Procedure 3

- Weighing the already treated fibre or fibres.
- Mixing the weighed fibres.
- Feeding into the carding machine.
- Directing and mixing the fibre or fibres in the carding machine forming a web.
- Forming a felt by folding and creasing of one or more webs in a cross lapper.
- Reducing the thickness of the felt in a pre-needle puncher.
- Needle punching the felt with one or more machines.
- Structuring the felt.
- Calendaring.
- Rolling and formatting.

### Procedure 4

- Weighing the already treated fibre or fibres.
- Mixing the weighed fibres.
- Feeding into the carding machine.
- Directing and mixing the fibre or fibres in the carding machine forming a web.
- Forming a felt by folding and creasing of one or more webs in a cross lapper.
- Reducing the thickness of the felt in a pre-needle puncher.
- Needle punching the felt with one or more machines.
- Structuring the felt.
- Thermofixing the non woven fabric.
- Rolling and formatting.

### Procedure 5

- Weighing the already treated fibre or fibres.
- Mixing the weighed fibres.
- Feeding into the carding machine.
- Directing and mixing the fibre or fibres in the carding machine forming a web.
- Forming a felt by folding and creasing of one or more webs in a cross lapper.
- Reducing the thickness of the felt in a pre-needle puncher.
- Needle punching the felt with one or more machines.
- Structuring the felt.
- Inducing the non woven fabric with resins.
- Drying.
- Rolling and formatting.

### Procedure 6

- Weighing the already treated fibre or fibres.
- Mixing the weighed fibres.
- Feeding into the felting machine.
- Directing and mixing the fibre or fibres in the carding machine forming a web.
- Forming the felt by projecting the fibre onto a grid.
- Reducing the thickness of the felt with a thickness regulator.
- Needle punching the felt with one or more machines.
- Thermofixing using calendars, infra-red, hot gas or air.
- Rolling and formatting.

### Procedure 7

- Weighing the already treated fibre or fibres.
- Mixing the weighed fibres.
- Feeding into the felting machine.
- Directing and mixing the fibre or fibres in the carding machine forming a web.
- Forming the felt by projecting the fibre onto a grid.
- Reducing the thickness of the felt with a thickness regulator.
- Needle punching the felt with one or more machines.
- Thermofixing using calendars, infra-red, hot gas or air.
- Rolling and formatting.

### Procedure 8

- Mixing chippings from the first claim with chippings treated with Legionella anti-bacterials.
- Extruding the chippings.
- Forming the fibres in monofilaments or continuous filaments.
- Forming a web.
- Forming a felt by projecting the fibre onto a grid.
- Reducing the thickness of the felt with a thickness regulator.
- Needle punching the felt with one or more machines.
- Thermofixing using calendars, infra-red, hot gas or air.
- Rolling and formatting.

### Procedure 9

- Weighing the already treated fibre or fibres.
- Mixing the weighed fibres.
- Feeding into the felting machine.
- Directing and mixing the fibre or fibres in the carding machine forming a web.
- Forming the felt by disorientating, folding and creasing one or more webs, in a cross lapper or felting machine.
- Reducing the thickness of the felt.
- Sewing the felt with one or more machines.
- Structuring the felt.
- Thermofixing.
- Rolling and formatting.

### Procedure 10

- Mixing chippings from the first claim with chippings treated with Legionella anti-bacterials.
- Extruding the chippings and/or fluid mixture.
- Injecting the product.
- Structuring or laminating the compound.
- Covering or not covering the treated or untreated non woven fabric.
- Calibrating the thickness of the compound with a thickness regulator.
- Drying and polymerising.
- Thermofixing with calendars infra-red, hot gas or air.
- Rolling and formatting.

### Procedure 11

- Mixing chippings from the first claim with chippings treated with Legionella anti-bacterials.
- Mixing fluids and solids.
- Injecting the product.
- Structuring or laminating the compound.
- Covering or not covering the treated or untreated non woven fabric.
- Calibrating or not calibrating the thickness of the compound.
- Drying and polymerising.
- Thermofixing with calendars infra-red, hot gas or air, etc.
- Formatting and rolling.

In one of the preferred uses of the patent, according to patent No. 200402848, the non woven fabrics in the main patent as well as the filters and/or injected filtration sheets obtained by the process described and claimed in the same, shall be the purpose of this additional patent application using products obtained form copper, zinc and other metal elements (listed above) in percentages in terms of the application, the main principle of which is the release of negative and positive ions.

### Examples:

- Non woven fabric filters and fabric filters with antiviral, algaecide, fungicide and bactericide properties claimed in this patent *(Legionella, Klebsiella pneumoniae, Pseudomonas aeroginosa, Staphylococcus aureus, Bacillus cereus, Vibrio para hacmolyticus, Proteus Vulgaris, Salmonella typhimorium, Staphylococcus epidermidis, Escherichia coli, Serratia marcescens and Burkholderia cepacia,* anthrax, A and B flu virus and Avian flu or acute serious respiratory syndrome (ASRS), fungus such as *Phytophthora cinnamoni*) made in non woven fabrics and woven fabrics from fibres claimed in this family of patents, treated with compounds or combinations of compounds listed in this patent, such as:
   - *Anti-Pseudomonas, Klebsiella, Legionella and Staphylococcus* filters made from synthetic fibres treated with Triclosan and BCD.
   - Anti A and b flu filter with ribavirune.
   - Anti *Phytophtora cinnamoni* filter made from natural and synthetic fibre mix treated with copper compounds.
   - Anti-algae filters made from synthetic fibres treated with Tributylestane.

- Filters made from fibres claimed in this family of patents, treated with compounds or combinations of compounds listed in this family of patents which interweave and/or combine with sheets and elements designed to improve the filter's retention properties;
   For example: sandwich filter of several, layers of non woven fabric and woven fabric resistant to washing preferably between 10-2000gr/m² of polyolephines, one of which includes a specific anti-Legionella treatment with the addition of one of the substances listed to the fibre. These substances may include chlorophenols and the second of which includes an antiviral treatment separated from both bodies by a plastic body; preceded by a layer of bacteriostatic warp and weft fabric to retain fats also joined to a plastic body and with a plastic film with different final porosities to increase the filter's retention properties.
- Drainage and recirculation system for a percentage of the volume of water in cooling towers, hot water tanks and others listed in this report, using filters manufactured using the fibres claimed in this family of patents, treated with compounds or mixtures of compounds listed in this family of patents to remove bacteria, algae, viruses, and fungus. For example:
   - Drainage and recirculation system for water in a drinking water tank comprising a pump and conduits for drainage and recirculation including the Anti-*Pseudomonas, Klebsiella, Legionella and Staphylococcus* filters made from synthetic fibres described in the first example; resistant to chemical products used in disinfection (Cl, ClO₂, H₂O₂).
- The manufacture of garments, curtains and sheets made from non woven fabrics and woven fabrics in accordance with the filtration fabrics in this family of patents which are resistant to washing, dermatologically inert and which do not harm the environment to be used for cleaning biofilms and/or installations likely to be infected and /or to be used in risk situations for example a polyester-cotton mix cloth with metal compounds.
- Geotextile fibre filter claimed in this family of patents, treated with compounds or mixtures of compounds listed in this family of patents resistant to washing for the removal of bacteria, viruses and effluent micro-organisms, aquifers, wells, river beds and similar, or protection of the same from micro-organisms; comprising a non woven filtration fabric for example 100% 500gr/m² polyester fibre with mechanical properties in accordance with the CEE marks and EN standards.
- Woven fabric and non woven fabric fibre filter claimed in this family of patents, treated with compounds or mixtures of compounds listed in this family of patents which also include other listed compounds which assist in the activity of the same or improve the function of the fabric; for example 100 gr/m² 80% fibres treated with guanidine and 20% treated with anti-foaming agents.
- Woven fabric and non woven fabric impregnation process through immersion in a bath in which the bactericide effect comes from impregnating the fibre of the compounds referred to in this family of patents via another compound; for example, the use of methylene blue tint impregnation (bactericide) combined with other bactericides such as benzalkonium.
- Non woven fabric filtering method formed by mixing treated fibres generating synergetic effects such as; fibres treated with compounds which fix the micro-organism into the filter, for example, an adhenosine; and fibres treated with a compound that destroys cellular membranes, for example isothiazolones.
- Personal filtration mask made from thermoforming non woven fabric from fibres treated with antibacterial and antiviral compounds claimed in this family of patents.
- Filtration mask comprising a first body with a shell which protects and covers the mouth and nose, forcing the air flow through a second body which can form different diameters and shapes fitting into the first body, offering a biocide function to the whole set. The filters in this patent are included in this second body with the configuration required by the relevant EN standards, with the preferred configuration being a mask comprising an anti-Legionella filter layer and an anti-flu layer obtained from treated fibres and filtration layer between plastic material which may or may not have been treated.
- More complex anti-Legionella filters or filtration mechanisms and/or other anti bacteria, fungus, virus and algae mechanisms stated in this family of patents which include woven fabric and non woven fabric filters claimed in this family of patents, treated with compounds or mixtures of compounds listed in this family of patents, such as; Examples of anti-Legionella cartridge filters:
   - A central, cylindrical, micro-perforated body around which a non woven fabric is wound plus a thread obtained from treated fibres through which water passes and the contaminants retained.
   - A body filled with fibres or mouldable non woven fabric with 20% thermofusible fibre mixed with 80% synthetic fibre treated with some of the aforementioned compounds.
   - Cartridge or plate filters suitable for the different fluid circulation systems.
- Plastic fabric or non woven fabric floating filter which is buoyant, either through the fabrics themselves or using floatation systems such as expanded polyethylene fibres claimed in this patent, treated with compound or a combination of compounds listed in this family of patents with an anti-biofilm action (bacteria and algae) in the gas-liquid interfaces, for example polyolephines treated with a mixture of compounds in this family of patents, for example, biguanidines plus BCB and tributylestane.
- Woven fabric and non woven fabric fibre filter claimed in this family of patents, treated with compounds or mixtures of compounds listed in this family of patents to eliminate biofilms in solid-liquid interfaces, for example: fabric made from polyester polypropylene filaments treated with BCD with a layer of plastic mesh to protect the action of the biofilm in water-liquid interfaces.
- Trenches around trees and wrappings for tree trunks made from woven fabric and non woven fabric fibre filter claimed in this family of patents, treated with compounds or mixtures of compounds listed in this family of patents, fungicides for example:
   polypropylene and jute fibres treated with copper compounds to protect "Quercus" against *Phytophthora cinnamomi* which is in turn biodegradable providing nutrients to the soil where it is located.
- Geotextile filters made form woven fabric and non woven fabric fibre filter claimed in this family of patents, treated with compounds or mixtures of compounds listed in this family of patents; for example a mixture of jute and polyolecephines polyethylene, treated with, for example; metalaxil to prevent fungus spreading on flower pots and plants.
- Filtration membranes and plates referred to in this family of patents treated with compounds listed in this family of patents such as:
   - Homogenous filtration membrane made from treated cellulose acetate on a cellulose support forming a regular porosity membrane.
   - Plates obtained by mixing decoloured wood cellulose, cotton fibres, activated diatomeas, polyethylene synthetic fibres and a binding product.
   - Filters made by mixing polypropylene and cellulose acetate with phenolic compounds plus activated carbon fibres to enhance the adhesion of the bacteria with the filtration medium.
   - Membranes for dialysis equipment with an anti-bacterial and anti-viral treatment.

Having described this invention in sufficient detail with the attached diagrams for this invention and not being restricted to the same, this description is for information and illustrative purposes but does not limit the same whenever the flowing claims are met.

## Claims

1. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" formed by artificial, synthetic fibres cut or in monofilaments and their mixtures, previously treated with anti-bacterial compounds **characterised by** the fact that the non woven fabric is formed by any of the following fibres:
a) Natural polymer chemical fibres which have or have not been modified.
b) Synthetic polymer chemical fibres.
c) Various fibres such as:
o Glass
o Carbon
o Other fibrous materials
o Bicomponents and polycomponents

2. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" in accordance with the previous claim **characterised by** the fact that the non woven fabric may comprise a mixture of fibres in the first claim with a proportion of one of the others from 0.5 to 99.5%.

3. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" in accordance with the previous claims **characterised by** the fact that the range of non woven fabric fibres in the first and second claims shall be as follows:
- Fibre thickness from 0.02 to 1,500 deniers.
- Cross section of fibres: circular, square, elliptical, hollow, trilobal, flat and similar.
- Fibre lengths from 0.1mm to 500mm and continuous filaments.
- Non woven fabric density in thicknesses of: 0.1 to 15cm.
- Non woven fabric weight: from 5 to 2,500 grams.
- Fibre fusion point: from 60° C to 450° C.
- Translucent / white to black and combinations thereof.

4. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" in accordance with the previous claims **characterised by** the fact that the manufacturing process for the non woven fabrics in the first and second claims comprises the following operations:
- Selection of fibres already treated with antibacterial additives.
- Weighing of each and every fibre from the groups of fibres in the fibre mix.
- Mixing the same of different fibres.
- Forming a web or felt.
- The superimposition of several non woven fabric layers manufactured from the same fibre or from a mixture of different fibres.
- Joining one or more layers on non woven fabrics or joining one or more layers with one or more layers of intermediate mesh and supports.
- Finishes of several different forms of thermofusion, additives and compounds for different treatments for special finishes for each application.
- Cutting, rolling and formatting of the non woven fabric or resulting compound.

5. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" in accordance with the previous claims **characterised by** the fact that the manufacturing process for the non woven fabrics in the first and second claims comprises at least one of the following operations:
- Weighing the already treated fibre or fibres.
- Mixing the weighed fibres.
- Feeding into the carding machine.
- Directing and mixing the fibre or fibres in the carding machine forming a web.
- Forming a felt by folding and creasing of one or more webs in a cross lapper.
- Reducing the thickness of the felt in a pre-needle puncher (according to the processes).
- Needle punching the felt with one or more needle plates (according to the processes).
- Structuring the felt (according to the processes).
- Calendaring. Thermofixing or induction (according to the processes).
- Formatting, cutting and rolling.

6. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" in accordance with the previous claims **characterised by** the fact that the manufacturing process for the non woven fabrics in the first and second claims comprises some of the following operations:
- Weighing the already treated fibre or fibres.
- Mixing the weighed fibres.
- Feeding into the carding machine.
- Directing and mixing the fibre or fibres in the carding machine forming a web.
- Forming a felt by folding and creasing of one or more webs in a cross lapper.
- Reducing the thickness of the felt in a pre-needle puncher.
- Needle punching the felt with one or more machines.
- Structuring the felt.
- Calendaring.
- Rolling and formatting.

7. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" in accordance with the previous claims **characterised by** the fact that the manufacturing process for the non woven fabrics in the first and second claims comprises some of the following operations:
- Weighing the already treated fibre or fibres.
- Mixing the weighed fibres.
- Feeding into the carding machine.
- Directing and mixing the fibre or fibres in the carding machine forming a web.
- Forming a felt by folding and creasing of one or more webs in a cross lapper.
- Reducing the thickness of the felt in a pre-needle puncher.
- Needle punching the felt with one or more machines.
- Structuring the felt.
- Thermofixing the non woven fabric.
- Rolling and formatting.

8. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" in accordance with the previous claims **characterised by** the fact that the manufacturing process for the non woven fabrics in the first and second claims comprises some of the following operations:
- Weighing the already treated fibre or fibres.
- Mixing the weighed fibres.
- Feeding into the carding machine.
- Directing and mixing the fibre or fibres in the carding machine forming a web.
- Forming a felt by folding and creasing of one or more webs in a cross lapper.
- Reducing the thickness of the felt in a pre-needle puncher.
- Needle punching the felt with one or more machines.
- Structuring the felt.
- Inducing the non woven fabric with resins.
- Drying.
- Rolling and formatting.

9. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" in accordance with the previous claims **characterised by** the fact that the manufacturing process for the non woven fabrics in the first, second and third claims comprises some of the following operations:
- Weighing the already treated fibre or fibres.
- Mixing the weighed fibres.
- Feeding into the felting machine.
- Directing and mixing the fibre or fibres in the carding machine forming a web.
- Forming the felt by projecting the fibre onto a grid.
- Reducing the thickness of the felt with a thickness regulator.
- Needle punching the felt with one or more machines.
- Thermofixing using calendars, infra-red, hot gas or air.
- Rolling and formatting.

10. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" in accordance with the previous claims **characterised by** the fact that the manufacturing process for the non woven fabrics in the first, second and third claims comprises some of the following operations:
- Weighing the already treated fibre or fibres.
- Mixing the weighed fibres.
- Feeding into the felting machine.
- Directing and mixing the fibre or fibres in the carding machine forming a web.
- Forming the felt by projecting the fibre onto a grid.
- Reducing the thickness of the felt with a thickness regulator.
- Needle punching the felt with one or more machines.
- Thermofixing using calendars, infra-red, hot gas or air.
- Rolling and formatting.

11. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" in accordance with the previous claims **characterised by** the fact that the manufacturing process for the non woven fabrics in the first, second and third claims comprises some of the following operations:
- Mixing chippings from the first claim with chippings treated with Legionella anti-bacterials.
- Extruding the chippings.
- Forming the fibres in monofilaments or continuous filaments.
- Forming a web.
- Forming a felt by projecting the fibre onto a grid.
- Reducing the thickness of the felt with a thickness regulator.
- Needle punching the felt with one or more machines.
- Thermofixing using calendars, infra-red, hot gas or air.
- Rolling and formatting.

12. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" in accordance with the previous claims **characterised by** the fact that the manufacturing process for the non woven fabrics in the first, second and third claims comprises some of the following operations:
- Weighing the already treated fibre or fibres.
- Mixing the weighed fibres.
- Feeding into the felting machine.
- Directing and mixing the fibre or fibres in the carding machine forming a web.
- Forming the felt by disorientating, folding and creasing one or more webs, in a cross lapper or felting machine.
- Sewing the felt with one or more machines.
- Structuring the felt.
- Thermofixing.
- Rolling and formatting.

13. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" in accordance with the previous claims **characterised by** the fact that the manufacturing process for the non woven fabrics in the first, second and third claims, after any of the above processes or interspersed in the same, may form compound and sandwich non woven fabrics, from other treated or non treated woven and non woven fabrics, with polypropylene, polyethylene, polyester, glass fibre, aluminium, steel, mechanically or thermally treated or untreated foam with additives mesh supports.

14. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" in accordance with the previous claims **characterised by** the fact that the fourth to twelfth claims may be used in different applications with some of the following equipment:
Splitters, mixers, carding machines, cross lappers, felt machines, sewing machines, extruders, injectors, laminators, pre-needle punching machines, needle punchers, structurers, calendars, drying and thermofixing ovens, electrically resistant machines, direct or indirect gas flame machines, infra red thermofusion machines, embossers, welders, gluers, latex or resin and anti-bacterial component inductors, ultrafrequency machines, felting machines, fulling machines, powder application machines, fabric gluing machines, padding machines, scrapers, and others.

15. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" in accordance with the previous claims **characterised by** the fact that the manufacturing process for the non woven fabrics in the first, second and third claims comprises some of the following operations:
- Mixing chippings from the first claim with chippings treated with Legionella anti-bacterials.
- Extruding the chippings and/or fluid mixture.
- Injecting the product.
- Structuring or laminating the compound.
- Covering or not covering the treated or untreated non woven fabric.
- Calibrating the thickness of the compound with a thickness regulator.
- Drying and polymerising.
- Thermofixing with calendars infra-red, hot gas or air.
- Rolling and formatting.
Plus, based on the first claim:
High and low density polyethylenes, PVC, Nylon, Teflon, Silicons, Polyesters, Polycarbonates, Metacrylite, Polyolephines, Hydrocarbons in chain, Thermohardeners, Thermoplastics.

16. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" in accordance with the previous claims **characterised by** the fact that the manufacturing process for the non woven fabrics in the first, second and third claims comprises some of the following operations:
- Mixing chippings from the first claim with chippings treated with Legionella anti-bacterials.
- Extruding the chippings. And/or fluid mixture.
- Injecting the product.
- Structuring or laminating the compound.
- Covering or not covering the treated or untreated non woven fabric.
- Calibrating the thickness of the compound with a thickness regulator.
- Drying and polymerising.
- Thermofixing with calendars infra-red, hot gas or air.
- Rolling and formatting.
Plus, based on the first claim:
High and low density polyethylenes, PVC, Nylon, Teflon, Silicons, Polyesters, Polycarbonates, Metacrylite, Polyolephines, Hydrocarbons in chain, Thermohardeners, Thermoplastics, nitrogen mixtures, helium, phenols, inert gas, Aphodicarbonamides, foam making liquids, polyol, TDI, Toluene isozionate, Polyester, HR, etc with thicknesses up to 125 cm³.

17. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA IN ANY INSTALLATION AT RISK FROM LEGIONELLA PNEUMOFILA PROLIFERATION" in accordance with the previous claims **characterised by** the fact that the anti-bacterial treatment are carried out using silver based derivatives, phenoyhalogenate derivatives with transporters, plus permetrine derivatives, isothiazolinone derivatives, tetraalkylammonium silicons, organozinc compounds, zirconium phosphates, sodium, all of the above in solid or liquid form, plus other products likely to comply with this anti-Legionella bactericide.

18. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA FROM ANY COOLING EQUIPMENT, HEAT EXCHANGERS, TANKS, CONTAINERS, VENTILATORS AND ANY OTHER EQUIPMENT WHICH ACCUMULATES WATER AND MAY SPREAD IT AS AN AEROSOL" of a non woven fabric and/or sheet or injected filtration structure, i.e. obtained from the manipulation of artificial and synthetic fibres, as well as injected filtration structures, using processes tending to form a felt, in order to be finally converted into a non woven fabric, sheet, or injected filtration structure or alternatively using an injection process for the aforementioned sheets or injected structures, treated using preparations based on silver based derivatives, phenoyhalogenate derivatives with transporters, plus permetrine derivatives, isothiazolinone derivatives, tetraalkylammonium silicons, organozinc compounds, zirconium phosphates, sodium, triazine, oxazolidines, isotiazolones, hermiformals, ureides, isocynates, chorine derivatives, formaldehydes, carbenacime, or chippings or a mixture of chippings treated with similar products **characterised by** the fact that the anti-bacterial treatment process is carried out directly on the non woven fabrics, filters, injected filtration sheets.

19. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA FROM ANY COOLING EQUIPMENT, HEAT EXCHANGERS, TANKS, CONTAINERS, VENTILATORS AND ANY OTHER EQUIPMENT WHICH ACCUMULATES WATER AND MAY SPREAD IT AS AN AEROSOL" according to the 18 ^{th} claim **characterised by** the fact that copper, zinc and tin derivatives are used for this treatment or any other metal element with a similar nature to those stated in terms of their ability to release positive and negative ions.

20. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA FROM ANY COOLING EQUIPMENT, HEAT EXCHANGERS, TANKS, CONTAINERS, VENTILATORS AND ANY OTHER EQUIPMENT WHICH ACCUMULATES WATER AND MAY SPREAD IT AS AN AEROSOL" according to the 17^{th}, 18^{th} and 19^{th} claims **characterised by** the fact that in the application processes of products derived from copper zinc and similar products and the nature of the additional additives shall be as follows depending on the nature of the final compound:
- Microscopic powders.
- Application in solution, suspension, or aqueous emulsion or any other type of liquid if technically possible.
- Application in a mixture with polyethylene, polyamid, EVA chippings, EVA, different types of hot melt adhesives or of any other natures.
Application procedures:
- Liquid, mainly aqueous medium bath.
- Spray.
- Atomiser.
- Sheet.
- Inducted.
- Thermofixed.
- Applied.
- Injected.
- Immersed in any of the media listed above.
- Plus any other common procedure in industrial fabrics, plastics and foams, which are technically equivalent to those listed and applicable to the characteristics of the invention.

21. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA FROM ANY COOLING EQUIPMENT, HEAT EXCHANGERS, TANKS, CONTAINERS, VENTILATORS AND ANY OTHER EQUIPMENT WHICH ACCUMULATES WATER AND MAY SPREAD IT AS AN AEROSOL" of a non woven fabric and/or sheet or injected filtration structure, i.e. obtained from the manipulation of
artificial and synthetic fibres, as well as injected filtration structures, using processes tending to form a felt, in order to be finally converted into a non woven fabric, sheet, or injected filtration structure or alternatively using an injection process for the aforementioned sheets or injected structures, treated using preparations based on silver based derivatives, phenoyhalogenate derivatives with transporters, plus permetrine derivatives, isothiazolinone derivatives, tetraalkylammonium silicons, organozinc compounds, zirconium phosphates, sodium, triazine, oxazolidines, isotiazolones, hermiformals, ureides, isocynates, chorine derivatives, formaldehydes, carbenacime, or chippings or a mixture of chippings treated with similar products **characterised by** the fact that the anti-bacterial treatment process is carried out directly on the non woven fabrics, filters, injected filtration sheets obtained by the manufacturing process shall be applied in addition to filtration methods for Legionella Pneumofila, for all types of Legionella, anthrax A and B flu, Avian flu or acute serious respiratory syndrome (ASRS) using the addition of compounds grouped by families and active groups to be used in new applications:
• Glutaraldehyde
• Hypochlorite salts
• Chloroisocyanurates
• Sodium bromide
• 2.2-dibromo-3-nitrilopropionamide (DBNPA)
• N-trichloromethyl-thio)ftalamide (Folpet)
• 10.10'-oxibisphenox arsine (OPA)
• Denatonium Benzoate
• 1-bromo,1-bromomethyl-1.3 propanodicarbonitrile
• Tetrachloroisoeftalonitrile
• Poly(oxyethylene)(dimethylimine)ethylene (dimethylim)ethylendichloride
• Methylene bisthiocyanate (MBT)
• Dithiocarbamate
• Cyanodithiomidocarbomate
• 2-(2-bromo-2-nitroethenylfuran (BNEF)
• Beta-bromo-beta-nitroestyrene (BNS)
• Beta-nitroestyrene (NS)
• Beta-nitrovinylfuran (NVF)
• 2-bromo-2-bromomethyl-glutaronitrile (BBMGN)
• 1.4-bis(bromoacetoxy)-2-butene
• Acroline
• Bis(tributyltin) oxide (TBTO)
• 2-(tert-butylamine)-4-chloro-6-(ethylamine)-s-triazine
• Tetraalkyl phosphonium chloride
• 7-oxabicycle[2.2.1]heptane-2.3-dicarboxilic acid
• 4-5dichloro-2-n-octil-4-isozialine-3- dicarboxilic acid
• 1-bromo-3-chloro-5.5-dimethyldanton (BCD)
• Zinc pirition
• Alcohols:
• 2-methyl-5-nitromidazol-1-ethanol
• 2-bromo-2-nitropropane-1.3diol
• 2-(tiocyanomethyltio)benzitiazol (TCTMB)
• Terpineol
• Timol
• Chloroxylenol
• C12-C15 etoxiade fatty alcohol
• 1-metoxi-2-propanol
• Amines:
• 2-decylthioethylamine (DTEA)
• Alkyldimethylbenzylammonium chloride
• Tetrahydro-3.5-dimethyl-2H-1.3.5-hydrazine-2-tione
• 2-bromo-4-hydroxiacetophenone
• 2-N-octil-isothiazolin-3-one (OIT)
• Alkyldimethylamine coco oxide
• N-coco alkyltrimethylenamine
• 4-5-dichloro-2-n-octil-4-isozialine-3-one
• Tetralkylammonium silicon
• Organosulphurate compounds:
• Bis(trichloromethyl) sulphone
• S-(2-hydroxipropyl)tiomethanosulphonate
• Tetrakishydroximethyl phosphonium sulphate (THPS)
• Mercaptopyridine N-oxide (pyritione)
• Copper salts:
• Copper sulphate
• Basic copper carbonate
• Copper and ammonium carbonate
• Copper hydroxide
• Copper oxychloride
• Cupric oxide
• Cuprous oxide
• Copper and calcium powder
• Copper silicate
• Copper sulphate
• Copper sulphate and tribasic potassium (Bordeaux mixture)
• Isothiazolones:
• 4.5-dichloro-isothiazolinone (DCOIT)
• Butyl-benziisothiazolinone (butyl-BIT)
• Methylisothiazolone
• 2-N-actil-isothiazolin-3-one (OIT)
• Guanidines:
• Dodecylguanide acetate
• Dodecylguanade hydrochloride
• Polyhexamethylenbiguanide (PHMB)
• Salt of quaternary ammonium:
• 3-trimethoxy sylildimthyloctadecyl ammonium chloride (Silanequat)
• Alkyl dimethyl benzylammonium chloride
• 4-methylbenzoate dodecyl-di-(2-hydroxethyl)-benzyl ammonium
• Phenols and chlorinated phenols:
• 5-chloro-2-(2.4-dichlorophenexi) phenol
• 2.4.4'-trichloro-2'-hydroxyphenyl ether (Triclosan)
• m-phenoxybenoil-3-(2.2-dichlorovinyldimethylcyclo propane carboxylate
• Trichlorophenoxyphenol (TCP8)
• 1.23.benzothiadiazol-7-acid
• Thiocarboxylic-s- methyl ester
• 4-chloro-3-methyl-phenol
• Timol
• Saligenin
• O-phenylphenol
• Colourings:
• Methyline blue
• Brilliant green
• Gentian violet and dimethyl gentian violet
• Iodophors:
• Poly vinyl pyrrolidone
• Iodated povidone
The following specific anti-virals against common and avian flu have been added to the above compounds complementing this family of patents:
• Adamantanes:
• Amantadine
• Rimantadine
• Neuraminidase inhibitors:
• Zanamivir
• Oseltamivir or ribivarin
The following algaecides have been added to the above compounds complementing this family of patents:
• Tributyl tin and derivatives
• Sodium thiosulphate
The following fungicides have been added to the above compounds complementing this family of patents:
• Benzene substitutes:
• Chloroneb
• Chlorotalonil
• Dichloran
• Hexachlorobenzene
• Pentachloronitrobenzene
• Thiocarbamates:
• Metam-sodium
• Tirad
• Ziram
• Ferbam
• Ethylene-bis-dithiocarbamates:
• Maneb
• Zineb
• Nabam
• Mancozeb
• Thiophthalamides:
• Captan
• Captafol
• Folpet
• Copper compounds:
• Copper Phenylsalicylate
• Copper Linoleate
• Copper Naphthenate
• Copper Oleate
• Copper Quinolinolate
• Copper Resinate
• Organostanic compounds:
• Phenylstanic acetate
• Phenylstanic chloride
• Phenylstanic hydroxide
• Triphenylstane
• Cadmium compounds:
• Cadmium chloride
• Cadmium succinate
• Cadmium sulphate
• Other organic fungicides:
• Anilazine
• Benomyl
• Cycloheximide
• Dodine
• Etridiazol
• Iprodione
• Metalaxyl
• Thiabendazole
• Triadimefon
• Tonaphtate (O-2-Naphtyl m, N-dimethylthiocarbanylate)
• Fluoroquinolones:
• Fleroxacine
• Cyprofloxacine
• Chlorohexadine gluconate
• Compounds capable of incorporating metals in their structure:
• Zirconium sodium phosphate
• Aluminiums
• Calys
• Zeolites
• Exchange resins

22. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA FROM ANY COOLING EQUIPMENT, HEAT EXCHANGERS, TANKS, CONTAINERS, VENTILATORS AND ANY OTHER EQUIPMENT WHICH ACCUMULATES WATER AND MAY SPREAD IT AS AN AEROSOL" according to the first claim **characterised by** the fact that in a filter with the characteristics claimed in this family of patents its filtration capacity is optimised and improved by adding additives during the manufacturing process which facilitate the absorption of organic biomaterial by the filter using adhesines or other inorganic absorbents such as silica gel, activated carbon fibres, zeolites, ionic exchange resins, diatomea and perlite soils.

23. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA FROM ANY COOLING EQUIPMENT, HEAT EXCHANGERS, TANKS, CONTAINERS, VENTILATORS AND ANY OTHER EQUIPMENT WHICH ACCUMULATES WATER AND MAY SPREAD IT AS AN AEROSOL" according to the first claim **characterised by** the fact that the manufacturing process may be extended with compounds claimed in the manufacture of filters for:
- Public fountains, domestic drinking water distribution systems and other uses, in addition to the traditional systems described in the main patent.
- Pipes, water circulation systems in food packaging industries, water, drinks and foodstuff bottlers in general.
- Drinking water installations and equipment, the use of which runs the risk of contamination of the same: storage and distribution systems in airport terminal buildings, trains, ships and other similar locations.
- Cleaning and furnishing elements such as towels, curtains, sheets, pillows, bed covers, carpets, rugs, shower curtains, bath mats, bandages, cloths and other similar products used in public buildings used for health purposes, such as clinics, sanatoria, hospitals, laboratories and installations and other similar buildings.
- Showers and eyewashes, toilets, bidets, bath tubs, taps, air and water conduits, heating systems and any element likely to be contaminated using the installation of filters with anti-bacterial, anti-Legionella, antiviral, antifungal properties.
- Manufacture of personal protection filtration masks, safety suits for contaminated atmospheres, cloths and other items of clothing and cleaning for working in installations at risk, such as bird rearing industries and safety laboratories.
- Manufacture of filters for dialysis equipment for filtering hot water, waste products and water accumulated by the organism.
- Floating fabric and non woven fabric filters equipped with buoyancy by the fabrics themselves or other systems to protect aquifers, tanks, thermal water, water conduction and treatment plants.
- Trenches around trees and wrappings for tree trunks with fungicide activity to protect "Quercus" meadows, flower pots and other types of plants from attack from *Phytophthora cinnamomi.*

24. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA FROM ANY COOLING EQUIPMENT, HEAT EXCHANGERS, TANKS, CONTAINERS, VENTILATORS AND ANY OTHER EQUIPMENT WHICH ACCUMULATES WATER AND MAY SPREAD IT AS AN AEROSOL" according to the previous claims **characterised by** the fact that the manufacturing process may also include filter membrane and plate manufacturing processes used for the fibres in the claim.

25. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA FROM ANY COOLING EQUIPMENT, HEAT EXCHANGERS, TANKS, CONTAINERS, VENTILATORS AND ANY OTHER EQUIPMENT WHICH ACCUMULATES WATER AND MAY SPREAD IT AS AN AEROSOL" according to the manufacturing processes in the fourth to seventeenth claims of the main patent and the fifth claim in the additional patent **characterised by** the fact that they include a plasma and/or carbon activation treatment in the fibres used.

26. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA FROM ANY COOLING EQUIPMENT, HEAT EXCHANGERS, TANKS, CONTAINERS, VENTILATORS AND ANY OTHER EQUIPMENT WHICH ACCUMULATES WATER AND MAY SPREAD IT AS AN AEROSOL" according to the previous claims **characterised by** the fact that obtaining the different products claimed in this family of patents are obtained by conventional filament fabric methods.

27. "PRODUCTION METHOD AND FILTER COMPRISING NON WOVEN FABRIC AND/OR FILTERING INJECTOR STRUCTURES OR SHEETS WHICH ARE OBTAINED USING SAID METHOD AND WHICH ARE INTENDED FOR THE FILTRATION AND ELIMINATION OF LEGIONELLA PNEUMOFILA FROM ANY COOLING EQUIPMENT, HEAT EXCHANGERS, TANKS, CONTAINERS, VENTILATORS AND ANY OTHER EQUIPMENT WHICH ACCUMULATES WATER AND MAY SPREAD IT AS AN AEROSOL" according to the first claims **characterised by** the fact that obtaining the different products claimed in this family of patents are obtained by conventional filament fabric methods.
